# EUROPEAN PATENT APPLICATION

(11) **EP 1 016 342 A2**
(43) Date of publication of application: **05.07.2000**
(21) Application number: 99204299.4
(22) Date of filing: 24.12.1999
(51) Int. Cl.: A01K 1/06

(54) **Feeding fence**

(30) Priority: 29.12.1998 NL 1010912
(71) Applicant: DE BOER STALINRICHTINGEN B.V., NL-8938 AD Leeuwarden (NL)
(72) Inventor: Oevering, Sake, 9298 JR Kollumerzwaag (NL)
(74) Representative: Grootscholten, Johannes Antonius Maria

(57) **Abstract**

The invention relates to a feeding fence (1) for livestock, comprising at least one beam (2,3), a number of standing bars (4,5) on the beam, wherein pairs of bars form passages and at least one bar (5) of the pair is movable in each case between at least a first position leaving clear the passage and a second position blocking the passage; a control connected to the movable bar for controlling the position or positions to be occupied thereby; and closing means (8) which convert entry of a livestock animal into the passage with the movable bar (5) in the first position into movement thereof to the second position.

## Description

The present invention relates to a feeding fence for livestock, for instance in a stall, consisting substantially of a number of bars, a number of which are movable between a first and a second position, wherein passage is respectively left clear and blocked for the livestock.

Such feeding fences are generally known, wherein the movable bar or bars is or are pivotable on a tilting point in the plane of the feeding fence or rotatable on a substantially upright axis, wherein in the latter case the movable bar or bars is or are located in one rotation position in the plane of the feeding fence.

Such known feeding fences all have the drawback that the actual opening available for the head of a livestock animal is at a high position in the feeding fence, whereby the animal must insert its head high up, which in many cases is an undesirable hindrance, particularly in the case of young animals. By moving the head downward the bar or bars is or are brought together and locked behind the head while engaging the neck of the animal, so that the animal is fixed.

In addition, all known fences are very costly both in terms of production and maintenance resulting from the large number and complexity of the required components.

The invention has for its object to obviate or at least alleviate the above stated problems, this being achieved according to the invention by the combination of features of claim 1.

By making use of the entrance of the livestock into the passage between the bars for closing thereof it is possible to keep the entrance height or the height of the passage low, which is more pleasant for the livestock. Furthermore, a very simple control and very small numbers of and simple components are hereby possible to implement all the desired functions of the feeding fence herein.

These and other objectives and features will be described on the basis of the figure description following hereinbelow which is written with reference to the annexed figures. In the drawing:
fig. 1 shows a front view of a feeding fence according to the present invention;
fig. 2 shows a side view corresponding with fig. 1;
fig. 3 shows a top view corresponding with fig. 1 and fig. 2;
fig. 4 is a schematic top view of the construction from which the closing means and the control are formed in an embodiment of the feeding fence according to the present invention;
fig. 5 is a cross-sectional view along the line V-V in fig. 4;
fig. 6 is a cross-sectional view along the line VI-VI in fig. 4;
fig. 7 and fig. 8 show respectively a front view and a side view of a fence according to the present invention having in particular an alternative design of the movable bar therein; and
fig. 9 and fig. 10 show respectively a front and top view of a detail of a feeding fence in yet another embodiment.

In the following figure description of individual embodiments of feeding fences according to the present invention corresponding components are designated with the same reference numerals.

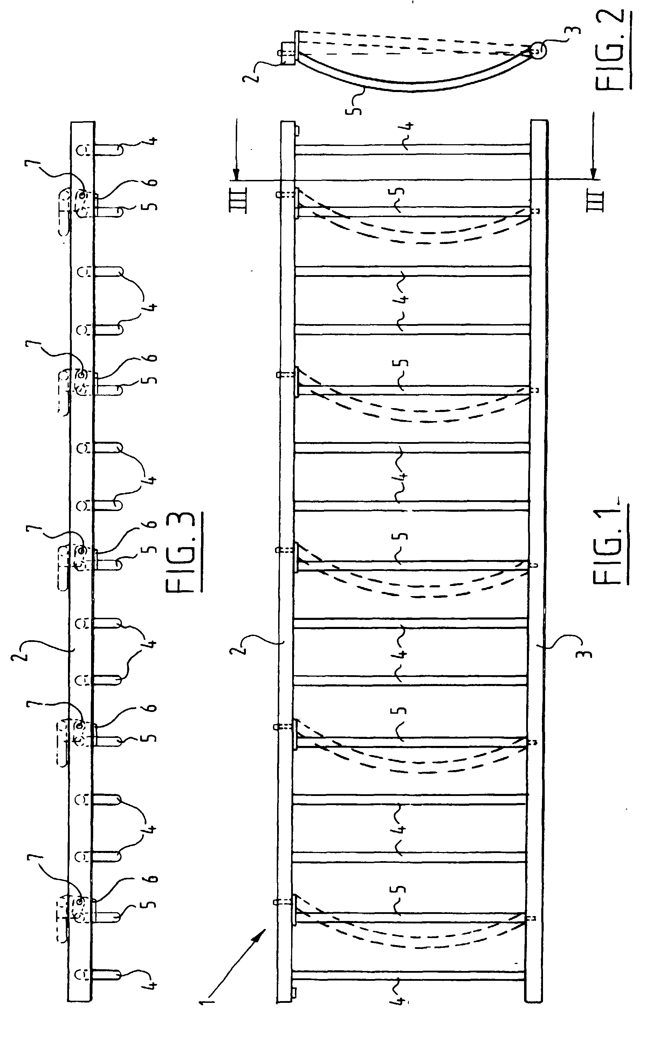

With reference to fig. 1, 2 and 3 a feeding fence 1 according to the present invention will be described hereinbelow.

Feeding fence 1 comprises an upper beam 2 and a lower beam 3, wherein fixed bars 4 and movable bars 5 are arranged between upper beam 2 and lower beam 3.

The movable bars 5 are shown in each of the figures 1, 2 and 3 with full lines in the second position thereof blocking the passage, while the first position leaving the passage clear is shown with dashed lines.

In the embodiment shown here the movable bars 5 have a circular arc shape, as is perhaps shown most clearly in figures 1 and 2. On the underside the movable bars 5 are arranged rotatably on lower beam 3, while at the top the movable bars 5 are connected via an arm 6 to upper beam 2. Arms 6 are themselves arranged fixedly on movable bars 5 and are connected pivotally to upper beam 2 at rotation points 7.

In the shown construction the movable bars 5 are moved by the entry of a cow or other animal from the first position shown in dashed lines and leaving the passage clear to the second position shown in full lines and blocking the passage. The passages are situated in each case between one of the movable bars 5 and the fixed bar 4 shown adjacently to the right thereof in fig. 1 and are situated at a low height, even lower than that corresponding to half the length of bars 4, 5. For cows or other livestock animals it is therefore made markedly simpler and more attractive to insert the head without lifting it through the passages in feeding fence 1. The animals do not have to raise their head and due to the circular arc form of the movable bars 5 and also of fixed bars 4 a wide reach is available for the animals.

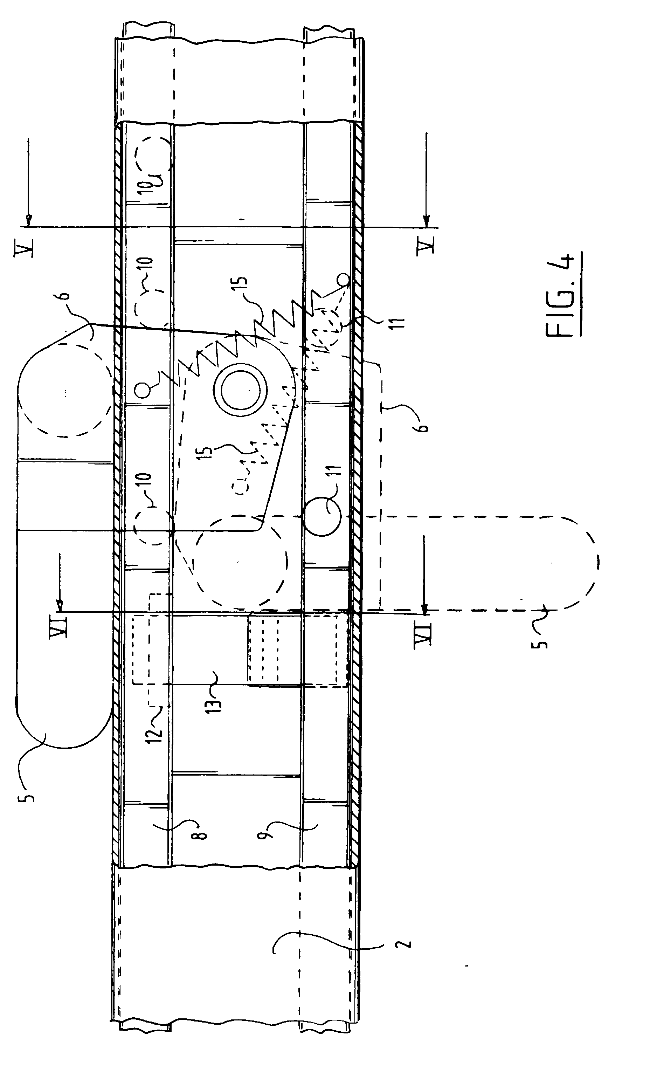

Having once placed the head through an above described passage, wherein movable bars 5 are carried into the second position shown in full lines and blocking the passage, whereby the above stated closing means are thus formed, a locking comes into effect which co-acts with arms 6. Although arms 6 are not of essential importance for the function of the closing means when the entry of an animal is converted into a movement of movable bars 5 from the first position to the second position thereof, the arms 6 bring about a further lowering of the greatest width of the passage to a height lower than that corresponding to half the length of bars 4, 5. The arm 6 moreover provides an engagement for a control for controlling the position or positions to be occupied by movable bars 5 and for the locking to block movable bars against further movements once they have arrived in the second position. The foregoing will be described below with reference to fig. 4, 5 and 6.

Fig. 4 shows the upper beam 2 wherein arm 6 is connected rotatably to upper beam 2 at a rotation point 7 under the upper beam. At variance with the views shown in fig. 1, 2 and 3, the position of the movable bar shown in full lines is the first position and the position of the movable bar shown in dashed lines is the second position blocking the passage.

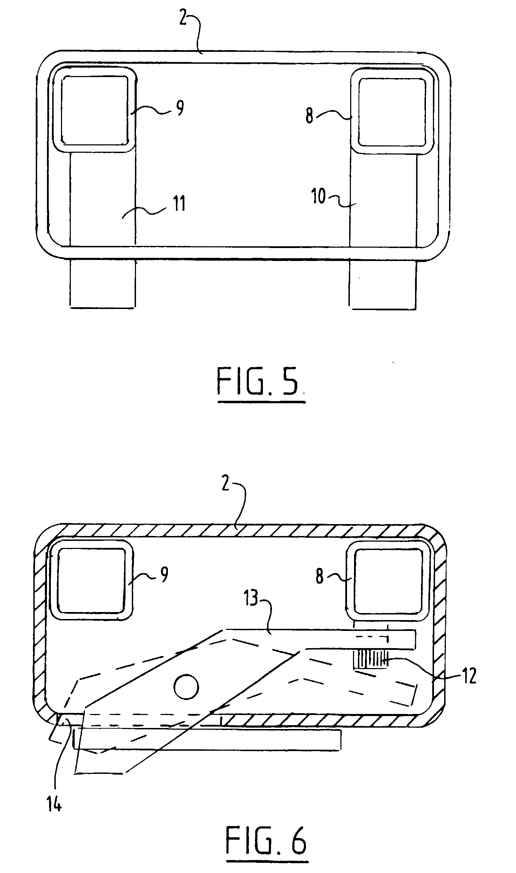

Fig. 4 shows that two slide rods 8 and 9 are arranged in the interior of upper beam 2, as also shown in fig. 5 and fig. 6. On the underside of slide rods 8, 9 are situated protrusions respectively 10 and 11, see fig. 5 in particular. Protrusions 10, 11 extend on the underside below upper beam 2 to control the position or positions to be taken up by the arm 6 and thus the movable bar 5. Further arranged on slide rod 8 is an incline 12 which co-acts with a drop lip 13 to form the locking.

Central closing of all passages is realized by sliding the slide rod 8 to the position with protrusion 10 in the position lying furthest to the left-hand side. During this sliding of slide rod 8 the protrusions 10 come into contact with arms 6. Continued sliding results in the left-hand position of protrusions 10, wherein the arms are "pressed aside" in order to carry movable bars 5 into the second position closing the passage. The fence is closed and the animals cannot enter to reach for the feed therethrough. This is also the situation of feeding fence 1 shown in full lines in fig. 1.

Sliding of slide rod 8, wherein protrusion 10 is carried to the middle position shown in fig. 4, corresponds with the free position. The incline 12 herein presses drop lip 13 downward on the right-hand side as shown in fig. 6 with dashed lines, so that the left-hand side thereof comes to lie in upper beam 2. Drop lip 13 thus forms no obstacle through opening 14 to movement of arm 6 and the locking is rendered inactive; hence the term "free position".

Further sliding of slide rod 8 to the right in fig. 4 to the position with protrusion 10 in the right-hand position results in the incline 12 being moved over drop lip 13 to a point beyond it, so that the drop lip is able to block arm 6. When the left-hand side of drop lip 13 can protrude through opening 14 and rests on arm 6 in the first position of movable bar 5 leaving clear the passage, the drop lip will drop downward behind the arm when movable bar 5 is carried by the entry of an animal into the second position blocking the passage, as shown in fig. 4 in dashed lines.

Although protrusion 10 on slide rod 8 is shown in three positions in fig. 4, the incline 12 is only shown in one position which thus corresponds with the free or middle position of protrusion 10.

Slide rod 9 which, as stated above, is also provided with a protrusion 11 fulfills only one function, i.e. central opening of the passages in the feeding fence. In the position of slide rod 9 with the protrusion 11 hereon in the position shown on the right the arm 6, and therefore movable bar 5, has entire freedom of movement. By moving slide rod 9 to the left with protrusion 11 in the position shown on the left the arm is pressed aside during this displacement of slide rod 9 to carry movable bar 5 to the first position leaving clear the passage.

As further shown in fig. 4, a spring 15 is arranged between upper beam 2 and arm 6. Spring 15 has the purpose of preventing as far as possible the position of movable bar 5 being undefined. Spring 15 pulls on arm 6 to carry movable bar 5 to the second position blocking the passage when it is moved from the first to the second position (under the influence of the entry of an animal) and vice versa.

A configuration is described in the foregoing with reference to figures 4, 5 and 6 wherein use is made of two slide rods 8 and 9. Many alternative embodiments with more or fewer slide rods, or a control other than those described and shown here are possible and must be deemed as lying within the scope of the present invention as this is defined in the appended claims. Use can thus be made of one slide rod with a different design of arm 6 and/or having more than one protrusion thereon, or other connections are possible to effect central closing and central opening of the passages as well as the free position and the catching position.

It is otherwise also possible in exceptionally simple manner to catch an individual animal, for instance for a veterinary treatment, by providing upper beam 2 and arm 6 with one or more than one passage through which, with correct alignment of upper beam 2 and arm 6, a pin or wedge (not shown) can be placed, substantially to block the arm with the movable bar 5 in the second position thereof blocking the passage.

Many other embodiments of the form of the movable bars and the fixed bars are also possible.

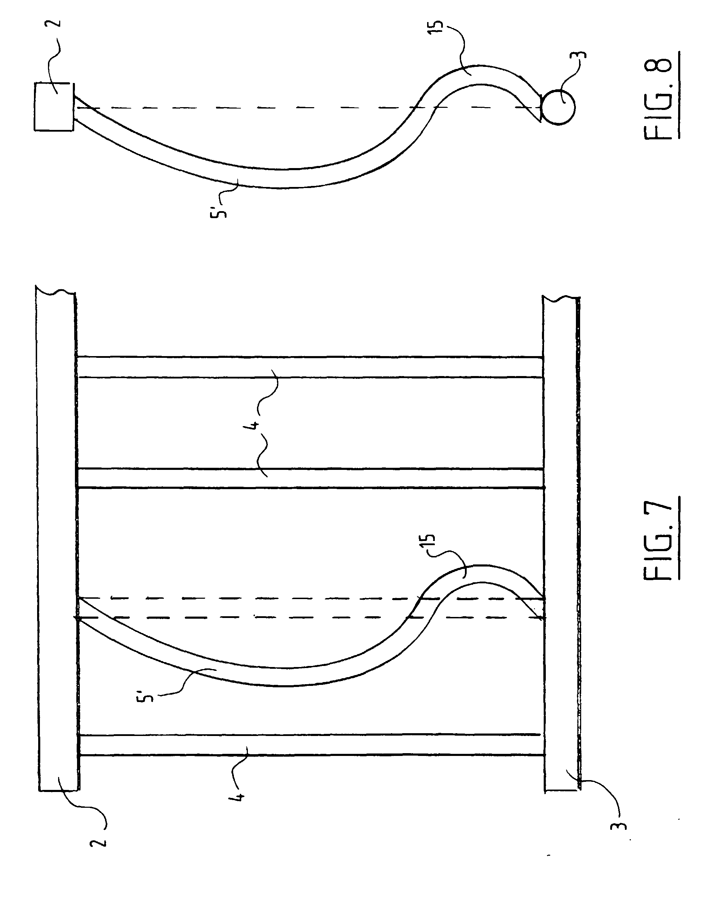

So as to enhance operation of the closing means the movable bar 5' in fig. 7 can be designed in an alternative embodiment with a multiple curvature. For this purpose the movable bar 5' is provided on the underside with a curl 15, as also shown in side view in fig. 8, with which the animal collides as it enters in order to carry movable bar 5' into the second position thereof closing the passage. The passage between movable bar 5' and fixed bar 6 adjacently to the right thereof is thus widest at a relatively low height and so provides the above stated advantages.

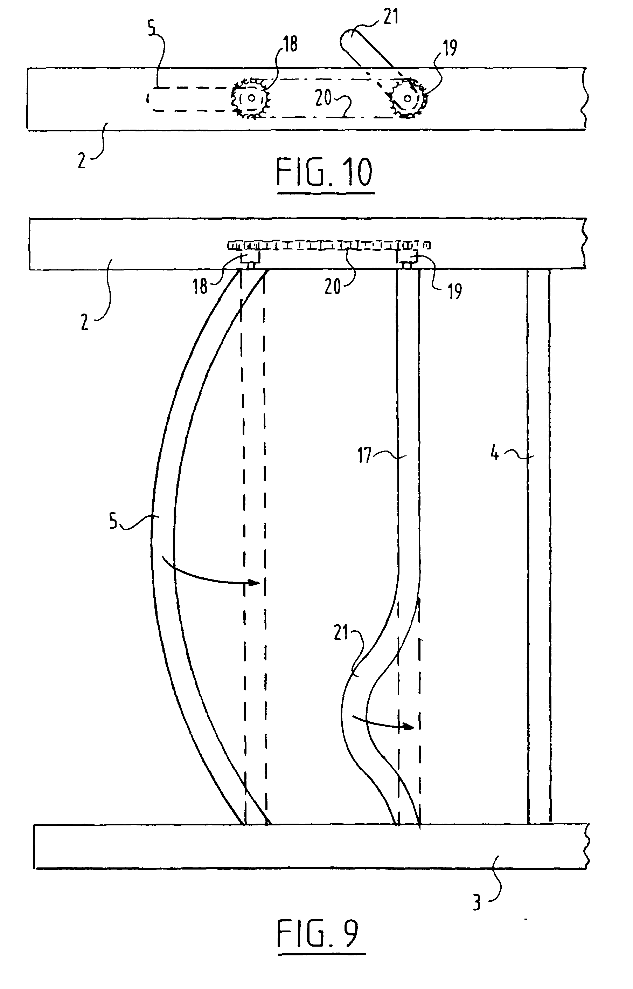

Fig. 9 and fig. 10 show yet another embodiment in respectively front view and top view of a feeding fence according to the present invention. In this embodiment both the bars 5 and 17 defining the passage are movable. The second movable bar 17 comprises a curl 21 on the underside thereof. Curl 21 extends rearward relative to the entry direction of the animals, as shown in fig. 10. When the animal enters it collides with curl 21, whereby the second movable bar 17 is carried to the position shown in dashed lines in fig. 9. The second movable bar 17 is provided in the upper beam with a toothed wheel 19 which is coupled via a chain 20 to a toothed wheel 18 in upper beam 2, which is coupled in turn to movable bars 5 and 17. Rotation of the second movable bar 17 results due to this coupling via chain 20 in rotation of movable bar 5 in the same direction. Movable bar 5 preferably moves to the position thereof shown in dashed lines. Since the rotation angles for both movable bars 5, 17 to reach the respective positions thereof shown in dashed lines are different, use can be made of a gear ratio for toothed wheels 18, 19 to bring into alignment the rotation angles realized by the chain coupling.

Use can otherwise be made in fig. 9 and fig. 10 of a control and a locking as described with reference to fig. 4.

The embodiment shown in fig. 9 and 10 has the advantage that entry of an animal also entails the animal being actively and actually pushed to one side by movable bar 5 and being centred in the passage. There is thus increased reliability of the movable bar 5 reaching the second position thereof blocking the passage shown with dashed lines for locking purposes. The forward movement of the animal during entry is transmitted onto movable bar 5 for rotation thereof, whereby the animal is also pressed to the side in the direction of the second movable bar 17. A higher degree of certainty is thus provided herewith that the locking can come into effect when the second position blocking the passage is reached, for instance the drop lip 13 in fig. 4 with the slide rod 8 in the right-hand position of protrusion 10 corresponding to catching of the livestock.

Other embodiments and options are further possible within the scope of the invention defined in the appended claims, wherein the foregoing is merely a description of embodiments. Other constructions of the arm are thus possible, use can be made of a single slide rod instead of the two described above with reference to fig. 4 by an appropriate positioning of protrusions 10, 11 in combination with the form of the arm 6. The second movable bar 17 of fig. 9 and 10 can even have a horizontal part on the top part of the curl 21 to prevent a relevant animal being able to move its head downward before both bars have reached the second position blocking the passage, and so on.

## Claims

1. Feeding fence for livestock, comprising:
- at least one beam;
- a number of standing bars on the beam, wherein pairs of bars form passages and at least one bar of the pair is movable in each case between at least a first position leaving clear the passage and a second position blocking the passage;
- a control connected to the movable bar for controlling the position or positions to be occupied thereby; and
- closing means which convert entry of a livestock animal into the passage with the movable bar in the first position into movement thereof to the second position.

2. Feeding fence as claimed in claim 1, wherein the closing means comprise an arm which is connected on one side to the movable arm and on the other side to the beam at a rotation point, wherein the bar is rotatable on an upward directed axis.

3. Feeding fence as claimed in claim 1 or 2, wherein at least the movable bar has substantially the form of a circular arc.

4. Feeding fence as claimed in claim 1, wherein the control comprises at least one slide rod with protrusions extending along or through the beam, which protrusions act on the closing means.

5. Feeding fence as claimed in claim 1, wherein the control comprises a cover which is slidable over the beam and which acts on the closing means.

6. Feeding fence as claimed in claim 1, wherein the control further comprises a locking which co-acts with the closing means and which holds the movable bar in the second position once it has arrived in the second position.

7. Feeding fence as claimed in claim 1, wherein the control further comprises adjusting means which co-act with the closing means and which carry the bar into the closer of the first and the second positions.

8. Feeding fence as claimed in claim 3, wherein the movable bar comprises a deformation in the direction opposed to the direction of entry, wherein the bar has a three-dimensional form.

9. Feeding fence as claimed in any of the foregoing claims, wherein the movable bar has a three-dimensional curved form.
